# EUROPEAN PATENT APPLICATION

(11) **EP 4 733 502 A1**
(43) Date of publication of application: **29.04.2026**
(21) Application number: 24209085.0
(22) Date of filing: 26.10.2024
(51) Int. Cl.: E04C 2/04, B28B 7/24, B29C 67/24

(54) **LIGHTWEIGHT POLYMER CONCRETE PANEL**

(71) Applicant: Concrete Products OÜ, 92411 Kärdla Hiiu maakond (EE)
(72) Inventor: Kallaste, Viljar, 92411 Kärdla (EE)
(74) Representative: Koitel, Raivo

(57) **Abstract**

The invention concerns a thin and large-format panel made of lightweight polymer concrete and a method and composition for vertical manufacture of the panel in a vertical casting mould formed from a vertical casting fixture.

## Description

### Field of technology

The invention belongs to the field of building panels, more specifically, the invention concerns a thin and large-format panel made of lightweight polymer concrete, and a method and composition for its vertical manufacture.

### State of art

Lightweight polymer concrete (artificial stone) is a solidified mixture of expanded clay, cement (mineral filler) and water. Lightweight polymer concrete contains a lightening aggregate, e.g., aerated glass, wood, styrofoam (PEP), vermiculite, perlite. Large-format panels of artificial stone are manufactured by way of horizontal casting in a fixture; such panels are not thin, as otherwise the casting will stratify and arc, and only one (upper) side gets finished during horizontal casting. In vertical casting, these panels are not thin because the mould does not fill up and compact to a sufficient degree.

A building material of artificial stone and a method for making same is known (US2015251954, Scanlan Tom, published September 10, 2015), which comprises about 50-89% w/w of cement and about 9-45% w/w of aerated (expanded) glass particles, wherein the aerated glass is in the form of spherically shaped beads in which about 10-50 percent of the beads are about 0.25-1 millimetre in diameter, and about 50-90 percent of the beads are about 1-6 millimetres in diameter. The disadvantage of this solution is that the building material obtained is a cement containing artificial stone, which is made in a horizontal mould and whose composition and method of manufacture do not allow the casting of a large-format thin panel.

A decorative material and its moulding method are known (CN116081980, CHINA RESOURCES CEMENT TECH RESEARCH DEVELOPMENT CO LTD, published on May 09, 2023), where the decorative material is made from the following raw materials in mass fractions: 100-120 parts of composite cement, 100-170 parts of sand, 0.4-6 parts of fibres, 0.05-0.24 parts of additives, 10-50 parts of water, 0.01-0.12 parts of pigment, 8-13 parts of expanded perlite and 2-8 parts of glass beads. The disadvantage of this solution is that the building material obtained is cement based and does not allow the casting of a large-format thin panel.

A heat-retaining and sound-absorbing paste material and its method of manufacture method are known (CN114196237A, Shanghai Sanju Tree Waterpool Tech Limited Company, published on March 18, 2022), which is manufactured from the following components by weight: 50-60 parts of water, 2-5 parts of organic cementing material, 1-3 parts of silicate solution, 3-5 parts of excipients, 5-20 parts of coarse Poraver beads, 5-10 parts of fine Poraver beads, 5-25 parts of hollow glass beads, 1-15 parts of fibres, 2-6 parts of filling powder and 1-3 parts of additives, wherein the particle size of coarse Poraver beads is less than or equal to 2 mm; the particle size of fine Poraver beads is 0.3 mm. The disadvantage of this solution is that it is a water-based and cement-hardening product (plaster), and it does not allow the casting of a large-format thin panel.

### Summary of the invention

The purpose of the invention is to manufacture a thin and large-format panel in lightweight polymer concrete, which can be used both as a furniture panel and as a finishing panel in construction. The panel is light in weight. The dimensions of a panel are in the following ranges: thickness 10-50 mm, length 500-6000 mm and width 500-2500 mm.

The panel is made vertically by pouring the composition for making the panel into a vertical mould formed from a vertical casting fixture, with both sides of the panel getting finished and having a unique appearance when vertically cast.

No cement and water is used in the manufacture of the panel. Aerated glass beads such as Poraver or Rotocell or other commercially available similar substances, or alternatively vermiculite or perlite, are preferably used as the lightening material.

The composition of the lightweight polymer concrete panel presented herein comprises:
- sand 6.5-23% w/w;
- lightening material 23-64% w/w;
   ∘ which in one embodiment is aerated glass beads with a content of 23-33% w/w:
      ▪ fine aerated glass beads 0.1-10% w/w, wherein fine aerated glass beads have a size of 0.25-0.5 mm;
      ▪ medium aerated glass beads 10-20% w/w, wherein medium aerated glass beads have a size of 0.5-1 mm;
      ▪ coarse aerated glass beads 5-15% w/w, wherein coarse aerated glass beads have a size of 1-2 mm;
   ∘ or in an alternative embodiment, vermiculite or perlite with a content of 58-64% w/w;
- adhesive 31-63% w/w, wherein the adhesive comprises resin, colour pigment, hardener.

The size of sand grains is up to 0.5 mm. The sand is preferably quartz sand.

The resin is preferably a polymer resin (polyester resin, epoxy resin). The resin can also be water based (also powdered).

### Embodiments of the invention

The lightweight polymer concrete panel is thin and has a large format. The panel is light in weight. The dimensions of a panel are in the following ranges: thickness 10-50 mm, length 500-6000 mm and width 500-2500 mm. In the preferred embodiment, the dimensions of the panel are in the following ranges: thickness 16-22 mm, length 1000-3500 mm and width 1000-2000 mm.

The lightweight polymer concrete panel is prefabricated, i.e., it is not manufactured *in situ* on the site (such as, for example, the casting of a lightweight concrete bridge structure) but the panel is made in a special vertical casting mould in a production unit and is, as a rule, also processed in the production unit. However, this does not in any way preclude the on-site manufacture for large and highly inaccessible sites, but even then, casting fixtures are brought to the site and the panel is pre-manufactured on the site.

Both sides of the lightweight polymer concrete panel are finished and have a unique appearance.

The lightweight polymer concrete panel is manufactured vertically using a vertical mould formed from a vertical fixture. A lightweight polymer concrete panel is made as follows:
- a vertical casting mould for casting with a special vertical fixture is made in advance
   - the mould panels are waxed and attached to the required thickness of the panel being made, while the size of the casting mould can be changed according to the length and width of the panel being made, a funnel is placed in the upper part of the mould (the fixture) to ease the pouring of the composition;
- the components of the composition are mixed according to the recipe;
- the composition is poured evenly into the mould to harden, as a rule, the composition is not compacted or vibrated;
- hardening 6-12 hours;
- the panel is removed from the form, followed by the post-processing of the panel - first it is sanded and then cut into final products with the required size, it is additionally milled, drilled and finished.

The distinctive feature of the composition of the lightweight polymer concrete panel presented herein is that its composition allows to cast large-format and thin panels (slabs, plates) vertically (in an upright position) in a casting mould formed in a special vertical casting mould. It is important that the composition also leaves so-called decorative holes in the finishing of the panel (on both sides), if so desired, and that the surface of the panel has a unique and natural pattern. By changing the casting temperature or the adhesive or by compacting the mixture during casting, it is possible to manufacture a panel without holes or to change the density and size of the holes.

The composition of one version of the lightweight polymer concrete panel comprises the following components:
- sand 13-23% w/w;
- aerated glass beads are used as a lightening material with a content of 23-33% w/w, which comprises:
   ∘ fine aerated glass beads 0.1-10% w/w, wherein fine aerated glass beads have a size of 0.25-0.5 mm;
   ∘ medium aerated glass beads 10-20% w/w, wherein medium aerated glass beads have a size of 0.5-1 mm;
   ∘ coarse aerated glass bead 5-15% w/w, wherein coarse aerated glass beads have a size of 1-2 mm;
- adhesive 50-63% w/w, wherein the adhesive comprises resin, colour pigment, hardener.

The sand is preferably quartz sand with a grain size of up to 0.5 mm.

Aerated glass beads are preferably Poraver or Rotocell beads.

Polymer resin (insoluble in water, e.g., polyester resin, epoxy resin) or water-based resin (also powdered) is used as adhesive. In a preferred embodiment, polyester resin is used.

In another embodiment, vermiculite or perlite with a content of 58-64% w/w is used as the lightening material.

The composition of the lightweight polymer concrete panel is cement- and water-free.

In a preferred embodiment, the composition of the lightweight polymer concrete panel comprises:
- quartz sand 16-19% w/w;
- fine aerated glass beads 4.5-6.5% w/w;
- medium aerated glass beads 14.5-16.5% w/w;
- coarse aerated glass beads 6.5-8.5% w/w;
- polyester resin with colour pigment and hardener 53-55% w/w.

In yet another preferred embodiment, the composition of the lightweight polymer concrete panel includes:
- quartz sand 6.5-7.5% w/w;
- vermiculite or perlite 58-64% w/w;
- polyester resin with a colour pigment and hardener 31-34% w/w.

The lightweight polymer concrete panel of the invention can be used as a furniture detail (doors, drawer panels, sides, back walls, etc.), but also as a finishing panel in construction (as decorative partitions and wall covering panels on both sides).

The advantages of vertical manufacturing over horizontal manufacturing are:
- allows the finishing of both sides of the panel;
- does not stratify (does not arc);
- the cast does not stratify (lighter particles do not rise to the surface of the panel as the cast does not vibrate as a rule);
- leaves a unique pattern (flow marks) on the panel.

The main advantages of the lightweight polymer concrete panel over the panels known in the state of the art are as follows:
- monomaterial, i.e., the same composition throughout the panel;
- a natural, even naturalistic decorative appearance;
- durable - resistant both to impacts and scratching, even if there are small indentations, they will make the product even more conspicuous;
- allows repairs, if necessary, and stain resistant - easy to clean, can also be washed with a pressure washer;
- light in weight;
- warm to the touch;
- weather resistant;
- environmentally friendly;
- recyclable when crushed to remake a similar product.

## Claims

1. A lightweight polymer concrete panel comprising sand, lightening material and adhesive, **characterised in that** the panel is vertically prefabricated, both sides of the panel are finished and unique in appearance, and that the panel has the following dimensions: thickness 10-50 mm, length 500-6000 mm, width 500-2500 mm.

2. A lightweight polymer concrete panel according to claim 1, **characterised in that** the panel has the following dimensions: 16-22 mm, length 1000-3500 mm, width 1000-2000 mm.

3. A method for manufacturing a lightweight polymer concrete panel according to claims 1 and 2 in a casting mould formed from a casting fixture, **characterised in that** the panel is made vertically, using a vertical casting mould formed from a vertical casting fixture, and the panel is made as follows:
- a vertical casting mould for casting with a casting fixture is made in advance, the mould panels of the casting mould are waxed and attached to the required thickness, length, and width of the panel being made, a funnel is placed in the upper part of the mould to ease the pouring of the composition of the lightweight polymer concrete panel;
- the components of the composition are mixed according to the recipe;
- the composition is poured evenly into the mould to harden, wherein the composition flows into the mould and, as a rule, it is not compacted or vibrated;
- hardening takes place in 6-12 hours;
- the lightweight polymer concrete panel is removed from the mould and the panel is post-processed: sanded, cut to the required size for the final product, milled, drilled and finished.

4. The composition of a lightweight polymer concrete panel comprising sand, lightening material and adhesive, **characterised in that** the composition comprises:
- sand 6.5-23% w/w;
- lightening material 23-64% w/w;
- adhesive 31-63% w/w.

5. The composition of a lightweight polymer concrete panel according to claim 4, **characterised in that** the sand is quartz sand with a grain size of up to 0.5 mm.

6. The composition of a lightweight polymer concrete panel according to claim 4, **characterised in that** the lightening material is in the form of aerated glass beads with a content of 23-33% w/w, wherein it comprises:
- fine aerated glass beads 0.1-10% w/w, wherein fine aerated glass beads have a size of 0.25-0.5 mm;
- medium aerated glass beads 10-20% w/w, wherein medium aerated glass beads have a size of 0.5-1 mm;
- coarse aerated glass beads 5-15% w/w, wherein coarse aerated glass beads have a size of 1-2 mm.

7. The composition of a lightweight polymer concrete panel according to claim 6, **characterised in that** the aerated glass beads are Poraver beads.

8. The composition of a lightweight polymer concrete panel according to claim 6, **characterised in that** the aerated glass beads are Rotocell beads.

9. The composition of a lightweight polymer concrete panel according to claim 4, **characterised in that** the adhesive comprises a resin, a colour pigment and a hardener.

10. The composition of a lightweight polymer concrete panel according to claim 9, **characterised in that** the resin is a polymer resin.

11. The composition of a lightweight polymer concrete panel according to claim 9, **characterised in that** the resin is a polyester resin.

12. The composition of a lightweight polymer concrete panel according to claim 9, **characterised in that** the resin is a water-based resin.

13. The composition of a lightweight polymer concrete panel according to claims 4 to 9, **characterised in that** the composition comprises:
- quartz sand 16-19% w/w;
- fine aerated glass beads 4.5-6.5% w/w;
- medium aerated glass beads 14.5-16.5% w/w;
- coarse aerated glass beads 6.5-8.5% w/w;
- polyester resin with colour pigment and hardener 53-55% vol.

14. The composition of a lightweight polymer concrete panel according to claim 4, **characterised in that** the lightening material is in the form of vermiculite or perlite with a content of 58-64% w/w.

15. The composition of a lightweight polymer concrete panel according to claims 4, 5, 9 and 14, **characterised in that** the composition contains:
- quartz sand 6.5-7.5% w/w;
- vermiculite or perlite 58-64% w/w;
- polyester resin with a colour pigment and hardener 31-34% w/w.
